# EUROPEAN PATENT SPECIFICATION

(11) **EP 3 096 933 B1**
(45) Date of publication and mention of the grant of the patent: **15.07.2020**
(21) Application number: 15701003.4
(22) Date of filing: 21.01.2015
(51) Int. Cl.: B29C 53/56, B29C 53/82, B29D 23/00

(54) **METHOD AND DEVICE FOR MANUFACTURING PIPE SHELLS AND PIPE SHELL MANUFACTURED THEREWITH**
VERFAHREN UND VORRICHTUNG ZUR HERSTELLUNG VON ROHRSCHALEN UND DAMIT HERGESTELLTE ROHRSCHALE
PROCÉDÉ ET DISPOSITIF POUR LA FABRICATION DE BILLETTES CREUSES ET BILLETTES CREUSES FABRIQUÉES AVEC CELUI-CI

(30) Priority: 22.01.2014 DE 102014100711
(43) Date of publication of application: 30.11.2016
(73) Proprietor: SAINT-GOBAIN ISOVER, 92400 Courbevoie (FR)
(72) Inventor: BISSINGER, Claus, 67271 Kleinkarlbach (DE); ALBRECHT, Volker, 67360 Lingenfeld (DE)
(74) Representative: Kuhnen & Wacker Patent- und Rechtsanwaltsbüro PartG mbB
(86) International application number: PCT/EP2015/051112
(87) International publication number: WO 2015/110458

(56) References cited:
- EP-A2- 1 900 949
- DE-A1- 2 309 866
- DE-A1-102004 013 446

## Description

The invention relates to a method for manufacturing pipe shells of bound mineral wool, wherein a web section of a mineral wool web provided with a thermosetting, but still unset binding agent which yields the desired wall thickness of the pipe shell is wound around a rotatingly driven pipe-shaped winding core, and wherein the pipe shell thus formed and still unset is set at the outer circumference of the winding core by the action of heat and the winding core is pulled out of the set pipe shell. The invention further relates to a device according to the preamble of claim 7 and a pipe shell according to claim 13.

Pipe shells serve the heat and/or sound insulation of piping or other pipe-shaped elements. Due to the broad field of application involved, and in particular the great number of pieces involved, it is in general the profitableness of the manufacturing of such pipe shells that lies within the center of observations among experts.

An especially suited method for manufacturing pipe shells results from DE 10 2004 013 446 A1. Here, a web section of a mineral wool web with a still unset binding agent is wound on the circumference of a winding core. Depending on the length of the web section of the mineral wool web to be wound up, the thickness of the fleece web section and the outer diameter of the winding core there results a pipe shell with a predetermined inner diameter and outer diameter in correspondence with the desired purpose of use. Subsequently, the binding agent is set in the pipe shell thus formed, and the outer circumferential face of the pipe shell is sometimes subject to finishing, in particular by grinding. Finally, the finished pipe shell is pulled off the winding core.

This known method relates in particular to an advantageous manner of setting the binding agent in the pipe shell. For this purpose, the winding core has circumferential perforations through which hot gas can be directed to the inner surface of the pipe shell and through the wall thickness of the pipe shell. This results in a very homogeneous setting of the pipe shells in very short time.

With the method known from DE 10 2004 013 446 A1 it is thus possible to manufacture pipe shells with a circular cross-section in a favorable manner. In addition, however, there exist also applications in which cross-sectional shapes for pipe shells are desired which deviate from a circular shape. Examples thereof are insulating elements for chimney systems since here the inner piping guiding the waste gas is frequently also available in a rectangular, especially square, cross-section, wherein, as a rule, they additionally have rounded corners for reasons of process technology. The pipe shells used for this purpose are presently assembled in practice usually of a plurality of, as a rule four, individual segments of insulating material plates and are thus given their pipe-shaped and polygonal cross-sectional shape. This is, however, complex to produce.

It is therefore an object of the invention to provide a method and a device for manufacturing such pipe shells with non-circular cross-section by means of which the manufacturing effort is reduced as compared to prior art. Moreover, it is also intended to provide such an improved pipe shell.

With respect to process technology this object is solved by the method with the features of claim 1. It is especially characterized in that the winding core has a polygonal cross-section, wherein the pipe shell also obtains a polygonal cross-section during the winding process, and in that the winding core is driven at inconstant angular speed, wherein the angular speed of the winding core varies as a function of the effective distance of the respective region of the web section which meets the outer circumferential face from the axis of rotation of the winding core, so that the tensile forces acting on the web section to be wound up during the winding process vary at a lesser degree and are in particular substantially constant.

The method according to the invention thus makes it possible for the first time to manufacture pipe shells with a non-circular cross-section, namely a polygonal cross-section, by a winding process. This enables a distinctly more efficient way of manufacturing of such polygonal pipe shells.

In particular, in accordance with the invention it is thus for the first time possible to manufacture such polygonal pipe shells integrally in mass production. Hence, the assembling of several individual elements, as was necessary in prior art, is omitted. The reduction of the process steps involved therewith results in the saving of performance, working time, and manufacturing costs.

Moreover, in the scope of the method according to the invention it is now possible to provide pipe shells that are particularly accurate to dimension and have with little manufacturing tolerances. Furthermore, the pipe shells manufactured this way are also characterized by a particularly good homogeneity of the insulating material, so that particularly good heat and/or sound insulation properties can be achieved. Above all due to the improved method in accordance with the invention it is possible to use the insulating material in a more target-oriented and economical manner since less "oversize" for possible inhomogeneity has to be provided.

A further advantage of the method according to the invention is that the mineral wool material to be wound up, despite the intrinsically inconstant course of movement, is not subject to excess strain in the course of the winding process, which could result in the destruction of the texture of the mineral wool.

This is particularly achieved by the fact that tensile forces acting on the web section during the winding process are chosen as a measure for the drive of the winding core, and that they are kept as constant as possible. As has turned out in the course of the invention, a drive of the winding core with regular rotational speed and/or angular speed would be a problem for the mineral wool material since, due to the polygonal cross-section of the winding core, depending on the position of rotation, different lever lengths of the winding core result in the position in which the web section meets the outer circumference of the winding core and/or the partial reel already available there. In other words, with a constant rotational speed of the winding core a particularly high tensile force on the mineral wool material would result if a corner region of the winding core engages the mineral wool material and drags it along. This might result in the tearing of the mineral wool web, all the more so as the binding agent has not yet set at this point of time.

The method according to the invention takes account of this finding and provides a control of the angular speed of the winding core such that, at any time of the winding process, substantially the same circumferential speed is given for pulling off the web section from a supply device, and hence substantially constant tensile forces act on the mineral wool material. In this respect, reference is made to the technological basic context according to which the circumferential speed is directly dependent on the angular speed and/or the rotational speed and the effective radius.

This achieves a gentle winding of the mineral wool material on the winding core. Moreover, inhomogeneity in the mineral wool material is avoided since there are no different stretching stresses of the mineral wool web in different winding phases. The method according to the invention thus renders it possible to provide polygonal pipe shells with high dimensional accuracy, accuracy of fit, and with particularly homogeneous material properties in mass production in very short time.

DE 23 09 866 A indeed discloses a manufacturing method for a pipe shell in which a winding core of polygonal shape may also be used. However, in the corresponding embodiment this method serves to form a circular pipe shell which is elastically deformable in partial regions on the inner side. Thus, it is intended to stably abut, under adequate pressure, on the outer surface of pipes to be insulated and having different diameters. Furthermore, this is to avoid that the entire pipe shell has to be provided to be soft or resilient. In accordance with the teaching of this prior art, elastically compressible bars are provided on the inner side of the pipe shell for this purpose. If the triangular core suggested in one embodiment is used as a winding mandrel, these resilient bars obtain substantially the shape of plane connecting faces between rounded corner regions in the cross-section of the pipe shell.

In order to achieve the desired resilience of these bars in the inner region it is further provided in accordance with this prior art that the amount of material in the region of the bars is substantially equal to the amount of material in the other regions of the pipe shell. The density in the wall of the pipe shell is accordingly smaller in the region of the bars than in the other regions, so that the bars are particularly well compressible.

These bars on the inner face of the pipe shell indeed provide a cross-sectional shape on the inner side of the pipe shell which deviates from the pure circular shape, but they still only serve to accommodate exclusively pipe elements with a circular cross-section. This prior art moreover emphasizes that the cross-sectional shape at the outer side of the pipe shell is circular-cylindrical at any rate. In other words, the method according to DE 23 09 866 A in the end again provides only a pipe shell with a circular cross-sectional shape even if the inner face of the pipe shell does not comprise an exact circular shape due to the elastically compressible bars in the unstrained, i.e. unmounted, state.

This prior art was thus not suited to anticipate the invention. In particular, it does not give any indication of the problems of the different tensile stresses acting on the mineral wool material with a polygonal winding core. Rather, due to the circumstances in DE 23 09 866 A, it has to be assumed that the mineral wool material is placed around the winding core in a more or less stress-free manner.

Advantageous further developments of the method according to the invention are the subject matter of the dependent claims 2 to 6.

Thus, the angular speed of the winding core can be controlled such that the tensile forces acting on the web section during the winding process deviate from the target value by a maximum of 10 %. Practical tests have shown that the mineral wool material is adapted to reliably assume transverse tensile stresses within such a tolerance range without being damaged. Process reliability is thus increased. A further improvement of reliability of the performance of the method is achieved if the winding core is controlled such that the tensile forces deviate from the target value by a maximum of 5 %.

It is further also possible that the pipe shell obtains a square cross-section during the winding process, wherein a winding core with a substantially square cross-section is used. Such pipe shells can be used in a particularly good manner as an insulation for chimney systems and the like. Thus, in accordance with the invention it is for the first time possible to provide suitable pipe shells with accurate fit also for this application in a cost-efficient manner in mass production. It is of further advantage if during the winding process the pipe shell obtains rounded corners in cross-section, wherein a winding core with rounded corner regions in cross-section is used for this purpose. This enables a more exact adaptation of the pipe shells to the corresponding piping in chimney systems or the like since these, for reasons of process technology, as a rule also have rounded corners. A pipe shell in accordance with the invention which has been further developed in such a manner can thus enfold its heat insulation in a particularly efficient manner on the smallest possible space.

If the cross-section of the pipe shell is designed with bar-shaped elevations at the inner face of plane shell regions, wherein a winding core with a cross-section of groove-shaped depressions at the outer side of plane face regions is used, bar-shaped elevations can also be provided on the pipe shells according to the invention. This achieves a stable contact of the pipe shell with the outer surface of the pipe body to be insulated, even if, due to manufacturing tolerances, a gap between these elements cannot be excluded.

It is further of advantage if the web section to be wound up is pressed against the outer face of the winding core, and/or a reel possibly already available there, by means of a pressure element, such as in particular one end of a conveyor belt, wherein the pressure element, depending on the position of rotation of the winding core, is tracked with respect thereto such that a gap width between the pressure element and the outer face of the winding core, and/or of a reel possibly already available there, remains substantially constant. This enables exact engaging and taking along of the web section by the winding core irrespective of its respective position of rotation. In this process, the tracking movement of the pressure element offsets the differing distances resulting from the contour of the winding core at the outer circumference thereof with respect to the axis of rotation and thus permanently cares for a suitable contact pressure of the fleece on the winding core. This enables a particularly uniform winding of the web section onto the winding core. Additionally, the damaging of the device components, the tearing of the fleece web in the case of too small a gap width, or the uncontrolled winding in the case of too large a gap are avoided.

It is further also possible that, following the setting process, the outer circumference of the set pipe shell which is still supported on the winding core is finished in a material-removing manner in a processing station, in particular a grinding station, with a grinding element, wherein the winding core is driven at inconstant angular speed, and wherein the angular speed of the winding core varies as a function of the distance of the processing element acting on the outer circumference of the pipe shell from the axis of rotation of the winding core. This enables a finishing process at the outer circumference of the set pipe shell to be performed in a particularly efficient manner despite its polygonal shape, if this is desired. In analogy to the winding process it is also of advantage here for achieving a uniform processing result on the surface of the pipe shell if the processing is performed uniformly in any region, irrespective of whether the processing element in the processing station acts on a corner region or a plane face on the pipe shell. This is taken into account by the fact that a substantially equal circumferential speed is adjusted in all points at the circumferential face of the pipe shell due to the variation of the angular speed of the winding core. Thus, a pipe shell that has been reworked uniformly at the surface can be achieved in an efficient manner.

In accordance with a further aspect of the present invention the object posed is solved with respect to device technology by the features of independent claim 7. Accordingly, a device for manufacturing pipe shells of bound mineral wool in accordance with the invention is designed with a winding station at which a web section of a mineral wool web provided with a thermosetting, but still unset binding agent which yields the desired wall thickness of the pipe shell is adapted to be wound around a rotatingly driven pipe-shaped winding core, a setting station for setting the pipe shell thus formed at the outer circumference of the winding core by the action of heat, and a pull-off station in which the winding core is adapted to be pulled out of the pipe shell. The device according to the invention is characterized in that the winding core has a polygonal cross-section and in that the device further comprises a control unit by means of which the winding core is driven at inconstant angular speed, wherein the angular speed of the winding core varies as a function of the effective distance of the respective region of the web section which meets the outer circumferential face from the axis of rotation of the winding core, so that the tensile forces acting on the web section to be wound up during the winding process vary at a lesser degree and are in particular substantially constant.

The method according to the invention can thus be performed in a particularly advantageous manner with this device. In particular, the above-explained advantages with respect to the forming of improved pipe shells can be achieved therewith.

Advantageous further developments of the device according to the invention are the subject matter of the dependent claims 8 to 12. The advantages explained above by means of the corresponding method steps can be achieved therewith in analogy.

In accordance with yet another aspect of the present invention a pipe shell with a polygonal cross-section which is manufactured by a method in accordance with the invention is provided pursuant to claim 13. This pipe shell comprises the advantages already explained above.

Advantageous further developments of the pipe shell according to the invention are the subject matter of the dependent claims 14 and 15, wherein the advantages resulting therefrom have also been detailed above already.

The invention will be explained in detail in embodiments by means of the Figures of the drawing. There show:
- Fig. 1: partially in section a winding core useful for the invention with schematically illustrated lateral rotation cones;
- Fig. 2: a section through the winding core pursuant to Fig. 1;
- Fig. 3: a schematic representation of the different operating steps during the production of a pipe shell in accordance with the invention;
- Fig. 4: the winding core in a representation pursuant to Fig. 1 with a set pipe shell arranged thereon, directly prior to the pulling off of the pipe shell; and
- Fig. 5: a section through a finished pipe shell.

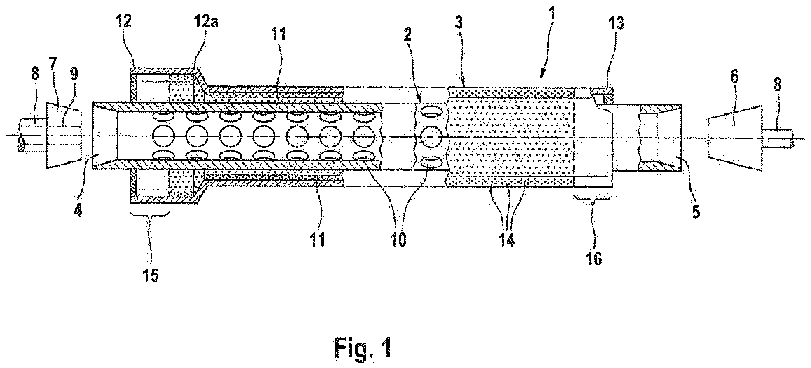

In Fig. 1, reference number 1 designates the winding core as a whole. The winding core 1 consists of an inner support pipe 2 and an outer bearing pipe 3 for the pipe shell which is not illustrated in detail in Fig. 1.

The inner support pipe 2 comprises cone-shaped accommodations 4 and 5 at the two ends thereof. Rotation cones 6 and 7 as they are illustrated in a schematically simplified manner in Fig. 1 are adapted to cooperate with these accommodations 4 and 5. The rotation cone 6 merely serves the centered accommodation of the support pipe 2 so as to be able to drive it rotatingly by means of a driven shaft 8 of a rotary drive. This also applies to the rotation cone 7 which, however, comprises additionally a central channel 9 through which gas can be introduced into the interior of the support pipe 2 during the rotating movement.

For the rotating entrainment of the support pipe 2 at the rotation cones 6 and 7 the friction entrainment at the accommodations 4 and/or 5 is, as a rule, sufficient. If required, a suitable form fit entrainment device may, however, also be provided.

The support pipe 2 has relatively large perforation holes 10 through which hot air may get into an intermediate space 11 positioned between the outer circumference of the support pipe 2 and the inner circumference of the bearing pipe 3. The ends 12 and 13 of the bearing pipe 3 are connected in a substantially gas-tight manner with the outer circumference of the support pipe 2, so that the intermediate space 11 is closed laterally. The wall of the bearing pipe 3, however, comprises a plurality of small perforation openings 14 through which hot gas can flow from the intermediate space 11 through the wall of the bearing pipe 3 and then hits on the inner surface of the pipe shell which is not illustrated in detail in Fig. 1, and flows through the wall thereof. In this manner, it is possible to quickly heat the mineral wool material of the pipe shell by the most intensive contact conceivable with the hot air and to completely set it after evaporation of the water contained in the binding agent. The large number of small perforation holes 14 ensures a homogeneous hot air flow without local fluctuations of the flow profile.

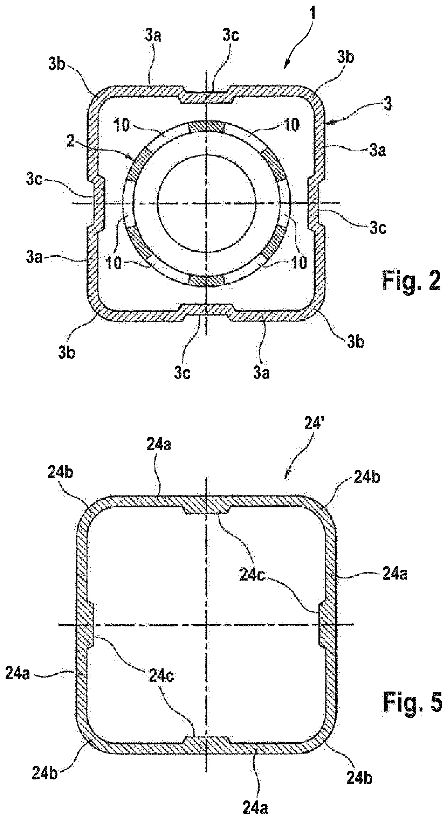

In accordance with the illustration in Fig. 2 the bearing tube 3 has a substantially square cross-section with plane face regions 3a which are each connected with one another by a rounded corner region 3b. In the middle of the plane face regions 3a, respective groove-shaped depressions 3c are additionally provided at the outer side. The perforation holes 14 have not been drawn here for simplification of the illustration.

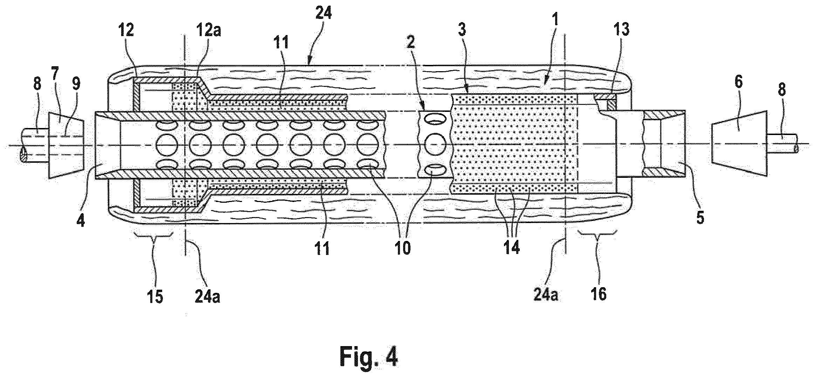

During the winding of the material of the pipe shell onto the winding core 1, parts of the mineral wool material cover the ends 12 and 13 of the bearing pipe 3, as can be seen in Fig. 4. Once the winding core 1 is pulled off the finished pipe shell, one of the ends 12 and 13 will form an abutment shoulder for the mineral wool material, depending on the pulling direction. In order to avoid damaging of the pipe shell by the pulling process of the winding core, the perforations are covered in end regions 15 and 16 close to the ends 12 and 13 of the bearing pipe 3 if the sheet of the bearing pipe 3 is perforated standard material, or have been omitted if the perforation holes 14 have only been applied to the material of the wall of the bearing pipe 3 for the instant purposes. In this manner it is prevented that mineral wool material is set in the vicinity of the shoulders formed at the ends 12 and 13, so that this mineral wool material is easy to widen and tear out during the pulling process of the winding core without this having negative effects on the rest of the pipe shell.

There are application cases for such pipe shells 24 in which it is necessary to form an end section which is widened in the free internal dimension at one end of the pipe shell 24. This is the case, for instance, with chimney insulation shells as may be seen in DE 199 09 787 A1, the full content of which is referred to for further details in this respect. For such a case the bearing pipe 2 comprises, at the end 12 or 13 at which the widening of the internal dimension of the pipe shell is to be performed, a projecting shoulder 12a whose dimension enlargement vis-à-vis the main part of the bearing pipe 2 corresponds to the end-side widening of the pipe shell 24. In Fig. 4, the chain dotted lines 24a each indicate up to which position the pulled-off blank of the pipe shell 24 is cut off during trimming. As is shown, the shoulder 12a is positioned axially within the adjacent line 24a in the useful range of the finished pipe shell 24, so that the corresponding widening of the clear internal dimension takes effect at the finished product. The parts of the blank of the pipe shell 24 illustrated in Fig. 4 which are positioned axially outside of the lines 24a may be damaged during the pulling process since they are cut off during trimming. It is understood that, if such a shoulder 12a is used, the blank of the pipe shell 24 may only be pulled off via the end 13 of the bearing pipe 2 and/or the winding core 1 which is opposite to the shoulder 12a.

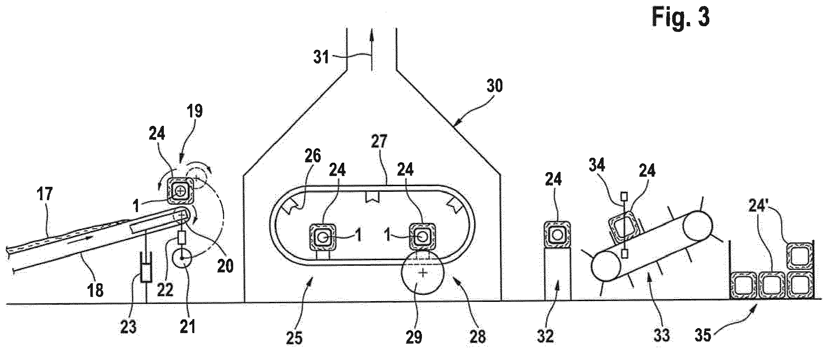

In the following, the different operating steps for manufacturing a pipe shell will be explained by means of Fig. 3. As may be seen, a web section 17 of a mineral wool web is guided on a conveyor belt 18 to a winding station designated as a whole with 19. The web section 17 is produced by a mineral wool web being, in a per se known manner, torn off in a position desired for forming the web section, as is also explained in prior art pursuant to DE 197 04 988 A1, so that reference may be made thereto. As a result, front and rear end regions of the web section 17 with gradually decreasing thickness are produced, so that a smooth transition of the beginning of the material and of the end of the material is achieved during the winding process on the winding core 1.

The web section 17 is in this manner guided from the conveyor belt 18 to the winding station 19 in which a winding core 1, held between rotation cones 6 and 7 in the manner to be seen in Fig. 1, is arranged above the output-side deflector roll 20 of the conveyor belt 18. The web section 17 thus runs into the gap between the deflector roll 20 and the winding core 1. The entrainment of the material of the web section 17 on the winding core 1 may be effected in that a rotation cone 7 with a gas channel 9 is used which is connected to a negative pressure source, as is the case and is explained in detail in prior art pursuant to DE 197 04 988 A1, so that reference may be made thereto. Then, the front end of the web section 17 is held at the outer circumference of the winding core 1 by negative pressure and thus wound.

Alternatively, however, a flap roll 21 may be used which is, during the running of the web section 17 into the gap between the deflector roll 20 and the winding core 1, swiveled upward on swivel arms 22 around the axis of the deflector roll 20 and flaps the material of the front end of the web section 17 around the winding core 1.

The rotational speed of the winding core 1 is variable such that the tensile forces acting on the web section 17 during the winding process are kept as constant as possible. For this purpose, a control unit that is not illustrated in the Figure is provided at the rotary drive which suitably controls the angular speed of the winding core 1 in an inconstant manner. Thus, despite the different lever length of the winding core 1 in the position in which the web section 17 meets the outer circumferential plane of the winding core 1, and/or of the partial reel already available there, which lever length is determined by the respective position of rotation of the winding core 1 and the layer thickness of the fleece material that has already been wound up, a substantially constant circumferential speed is provided. When the web section 17 meets a corner region 3b of the winding core 1, and/or a partial reel available there, the angular speed is lower than in the interposed plane face regions 3a. Thus, the tensile force acting during the winding process on the web section 17 to be wound up may be kept substantially constant. This prevents the mineral wool web from being torn.

In the present embodiment the rotational speed of the winding core 1 is further controlled such that a speed increased vis-à-vis the operating speed of the conveyor belt 18 and/or the circumferential speed of the deflector roll 20 results at the circumference thereof. Thus, the material of the web section 17 caught by the winding core 1 is subject to a tension and a stretching which further support the laminar orientation of the fibers, so that the fibers are arranged even better in the circumferential direction of the pipe shell and hence yield a favorable λ value of the pipe shell. At the same time, a certain homogenization of the material takes place in the web section 17 during the winding process. Moreover, it is to be understood that such a tensile strength ensures a tight contact of the material of the web section 17 at the circumference of the winding core 1 without the formation of wrinkles.

The output-side end of the conveyor belt 18 is supported to be adjusted in height at 23. In this manner the deflector roll 20, depending on the position of rotation of the winding core 1, is tracked with respect to the latter so as to remain in contact and to provide a substantially constant gap width. Moreover, the deflector roll 20 is tracked with respect to the pipe shell on the winding core 1 with increasing thickness of the reel, i.e. its height position is adapted to the current winding thickness. In particular if the lateral swivel arms 22 of the flap roll 21 are also adjustable in length, the flap roll 21 may, after the flapping of the front end of the web section 17, remain at the circumference of the winding core 1 and act as an additional pressure roll for the winding process.

After the end of the winding process in the winding station 19 the winding core 1 with the material for the pipe shell designated with 24 positioned thereon is transferred to a setting station 25. Here, the winding core 1 which is supported at its two ends of the support pipe 2 projecting from the material of the pipe shell 24 at accommodations 26 of a transport belt 27, is caught from both sides by rotation cones 7 with air channels 9, wherein the outer sheathing of the rotation cone 7 forms a substantially gas-tight connection with the conical accommodations 4 and 5 of the support pipe 2. In the illustrated example, hot air is conveyed into the interior of the support pipe 2 in this position, from where it may get into the intermediate space 11 via the perforations 10 of the support pipe 2 and from there via the wall of the bearing pipe 3 into the material of the pipe shell 24. Thus, the material of the pipe shell 24 is heated such that first of all the high water share contained in the binding agent evaporates and then the polymerization temperature is achieved. This results in a largely homogeneous setting of the material of the pipe shell 24 within short time.

By the fact that the pipe shell 24 is rotated on the winding core 1 in the setting station 25, the influence of the buoyancy of the hot air on the uniformity of setting is eliminated, so that a relatively low overpressure of the hot air can be used without questioning the homogeneity of the setting.

With respect to the integral design of the winding core 1 and/or the bearing pipe 3, the inner surface of the pipe shell 24 is of excellent dimensional accuracy and smoothness. The outer surface, however, still requires processing in the instant embodiment. For this purpose, the outer surface of the pipe shell 24 is ground with a grinding roll 29 in a grinding station 28, as is known per se. It is of great advantage that the inner side of the pipe shell 24 is still supported by the winding core 1, so that a wall thickness with high homogeneity and dimensional accuracy results by the adjustment of a desired distance between the outer face of the bearing pipe 3 and the circumferential face of the grinding roll 29. Since the pipe shell 24 was produced by winding around the winding core 1, perfect centricity also results from the grinding process. Thus, the pipe shell has extremely high homogeneity of setting and excellent surface quality both of the inner and of the outer surface with the best dimensional accuracy.

The winding core 1 is driven at inconstant angular speed, wherein it varies as a function of the distance of the processing element acting on the outer circumference of the pipe shell 24 from the axis of rotation of the winding core 1. Thus, a finishing at the outer circumference of the set pipe shell 24 can be performed in a particularly efficient manner despite its polygonal shape. In analogy to the winding process, for achieving a uniform processing result on the surface of the pipe shell it is achieved here, too, that the processing takes place uniformly in any region, irrespective of whether the processing element in the processing station acts on a corner region or a plane face at the pipe shell 24. This is taken into account by the fact that a substantially equal circumferential speed is adjusted in all points at the circumferential face of the pipe shell 24 by the variation of the angular speed of the winding core 1. Thus, a pipe shell that has been reworked uniformly on the surface can be achieved in an efficient manner.

The setting station 25 and the grinding station 29 are encapsulated by a cover hood 30 from which air is sucked pursuant to the arrow 31. In this manner the vapor originating during the setting process and the abrasive dust originating during the grinding process are discharged.

At a pulling station that is designated with 32 and that is illustrated symbolically only, the winding core 1 is pulled out of the interior of the pipe shell 24. For this purpose any suitable pulling device may be used, as it is, for instance, also illustrated and explained in DE 197 04 988 A1, so that reference may be made thereto. The support pipe 2 may be provided with form fit engagement means at its end to be caught by the pulling device, said means enabling a form fit engagement of the pulling device, for instance a circumferential groove or projecting circumferential projections. The adjacent material above the end 12 and/or 13 of the bearing pipe 3 which forms the ring shoulder has not been set, as explained, and may thus be deformed easily during the pulling of the winding core.

Then, the pipe shell 24 is supplied to a trimming station 33 in which the lateral ends of the pipe shell are cut off at the chain dotted lines 24a with symbolically illustrated saws 34 (see Fig. 4), and the pipe shell 24 is thus cut to length, wherein well set and hence dimensionally stable front sides of the pipe shell 24 result. The finished pipe shell is here designated with 24'. From the trimming station 22 the pipe shell 24' finally gets to a receiving container 35 for transportation.

The device operates in cycles to avoid that the hot air connections in the setting station 25 and the rotary mounting for the winding core 1 in the grinding station 28 have to be kept moving. Due to the very intensive uniform heating of the mineral wool material of the pipe shell 24 in the setting station 25 there results a cycle time of one pipe shell per minute, for example, wherein two or more hot air connections positioned side by side may also be provided in the setting station 25 if required so as to simultaneously set a plurality of pipe shells 24 in stations arranged one behind the other. With respect to the different internal dimensions of pipe shells 24 it is frequently sufficient to use winding cores 1 with equal support pipes 2, wherein different internal widths and/or end-side widened internal widths of the pipe shells 24 can be achieved by an appropriate widening of the intermediate space 11. Thus, all or at any rate many sizes of pipe shells 24' may be manufactured with one and the same support pipe dimension with respect to which the rotation cones 6 and 7 are optimized.

Fig. 5 finally shows a section through a finished pipe shell 24'. It has a substantially square cross-section with plane shell regions 24a which are each connected with each other via rounded corner regions 24b. Respective bar-shaped elevations 24c are formed in the middle at the inner face of the plane shell regions 24a.

In addition to the embodiments explained, the invention permits further design approaches.

The parameters of the controlled adjustment of the angular speed of the winding core are advantageously determined for the respective individual case by suitable tests. In this respect it is not necessary to adjust the deviation of the angular speed of the winding core such that the tensile forces acting during the winding process deviate from the target value by a maximum of 10 %. For some applications such as, for instance, with specific mineral wool materials or binding agent types, larger deviations are also possible without a relevant aggravation of the properties of the pipe shell occurring. The target value deviations indicated thus serve orientation purposes and give information about the regions in which good pipe shells can be achieved in a particularly reliable manner.

Furthermore, the polygonal shape of the winding core and/or the pipe shell manufactured thereon is not restricted to a square shape. In some chimney systems or other fields of use, rectangular piping is also used. In various other applications, in particular in the case of elements with larger dimensions which are to be insulated, it is, however, also possible to use pipe shells with a hexagonal, octagonal or another polygonal cross-section. These cross-section shapes can also be produced without problems by providing an appropriately designed winding core by the method and/or the device in accordance with the invention.

The radius of the rounded corners at the winding core and/or the pipe shell depends on the application and/or the design of the piping to be insulated. It may accordingly vary in wide ranges. It is in particular also possible that the corners in the cross-section of the winding core and/or the pipe shell are quasi not rounded, so that substantially exactly polygonal pipe shells are produced. This is in particular the case with pipe shells having more than four corners.

Furthermore, it is not necessary to form the pipe shell with bar-shaped elevations at the inner face of its plane shell regions. For many applications the fitting accuracy of the pipe shells which can be produced should also be sufficient without such bars.

Accordingly, the groove-shaped depressions at the outer side of the plane face regions at the winding core may then also be renounced.

Furthermore, depending on the conditions with respect to process technology and/or device technology, the pressure element which is pressed against the outer face of the winding core and which is adapted to be tracked may also be renounced. In simple cases a free pulling of the mineral wool web section from a feeding element or the like on the winding core is sufficient.

Instead of a grinding step for the finishing of the outer face of the pipe shell, another method for surface finishing may also be used, for instance milling, etc.

Moreover, in many cases it is also possible to renounce the reworking of the outer circumference of the set pipe shell. This is in particular the case if the pipe shell is, for instance, mounted to be covered in the factory already, as with pre-mounted chimney systems or the like, or if a lamination etc. is applied on the outer circumference.

Furthermore, it is not necessary, either, that the winding core is pulled out of the set pipe shell in axial direction. In some applications it is provided to slit the pipe shell longitudinally, so that the removal of the winding core through this slot is basically also possible.

## Claims

1. A method for manufacturing pipe shells (24') of bound mineral wool, wherein a web section (17) of a mineral wool web provided with a thermosetting, but still unset binding agent which yields the desired wall thickness of the pipe shell (24') is wound around a rotatingly driven pipe-shaped winding core (1), and wherein the pipe shell (24) thus formed and still unset is set at the outer circumference of the winding core (1) by the action of heat and the winding core (1) is pulled out of the set pipe shell (24'),
**characterized in**
**that** the winding core (1) has a polygonal cross-section, wherein the pipe shell (24) also obtains a polygonal cross-section during the winding process, and
**that** the winding core (1) is driven at inconstant angular speed, wherein the angular speed of the winding core (1) varies as a function of the effective distance of the respective region of the web section (17) which meets the outer circumferential face from the axis of rotation of the winding core (1), so that the tensile forces acting on the web section (17) to be wound up during the winding process vary at a lesser degree and are in particular substantially constant.

2. The method according to claim 1, **characterized in that** the angular speed of the winding core (1) is controlled such that the tensile forces acting on the web section (17) during the winding process deviate from the target value by a maximum of 10 %, and in particular by a maximum of 5 %.

3. The method according to claims 1 or 2, **characterized in that** the pipe shell (24) obtains a square cross-section during the winding process, wherein a winding core (1) with a substantially square cross-section is used, and wherein the pipe shell (24) obtains preferably rounded corner regions (24b) in cross-section during the winding process, wherein a winding core (1) with rounded corner regions (3b) in cross-section is used for this purpose.

4. The method according to any of claims 1 to 3, **characterized in that** the pipe shell (24) is formed in cross-section with bar-shaped elevations (24c) on the inner face of plane shell regions (24a), wherein a winding core (1) is used with groove-shaped depressions (3c) in cross-section at the outer side of plane face regions (3a).

5. The method according to any of claims 1 to 4, **characterized in that** the web section (17) to be wound up is pressed against the outer face of the winding core (1), and/or against a reel possibly already available there, by means of a pressure element, in particular one end of a conveyor belt (18), wherein the pressure element, depending on the position of rotation of the winding core (1), is tracked with respect thereto such that a gap width between the pressure element and the outer face of the winding core (1), and/or a reel possibly already available there, remains substantially constant.

6. The method according to any of claims 1 to 5, **characterized in that**, following the setting, the outer circumference of the set pipe shell (24) that is still supported on the winding core (1) is finished in a processing station, in particular a grinding station (28), with a grinding element (29) in a material-removing manner, wherein the winding core (1) is driven at inconstant angular speed, and wherein the angular speed of the winding core (1) varies as a function of the distance of the processing element acting on the outer circumference of the pipe shell (24) from the axis of rotation of the winding core (1).

7. A device for manufacturing pipe shells (24') of bound mineral wool, comprising a winding station (19) at which a web section (17) of a mineral wool web provided with a thermosetting, but still unset binding agent which yields the desired wall thickness of the pipe shell (24') is adapted to be wound around a rotatingly driven pipe-shaped winding core (1),
a setting station (25) for setting the pipe shell (24) thus formed at the outer circumference of the winding core (1) by the action of heat, and
a pull-off station (32) in which the winding core (1) is adapted to be pulled out of the pipe shell (24),
**characterized in**
**that** the winding core (1) has a polygonal cross-section, and
**that** the device further comprises a control unit by means of which the winding core (1) is driven at inconstant angular speed, wherein the angular speed of the winding core (1) varies as a function of the effective distance of the respective region of the web section (17) which meets the outer circumferential face from the axis of rotation of the winding core (1), so that the tensile forces acting on the web section (17) to be wound up during the winding process vary at a lesser degree and are in particular substantially constant.

8. The device according to claim 7, **characterized in that** the control unit controls the angular speed of the winding core (1) such that the tensile forces acting on the web section (17) during the winding process deviate from the target value by a maximum of 10 %, and in particular by a maximum of 5 %.

9. The device according to claims 7 or 8, **characterized in that** the winding core (1) has a substantially square cross-section, wherein the winding core (1) preferably comprises rounded corner regions (3b) in cross-section.

10. The device according to any of claims 7 to 9, **characterized in that** the winding core (1) comprises in cross-section groove-shaped depressions (3c) on the outer side of plane face regions (3 a).

11. The device according to any of claims 7 to 10, **characterized in that** further a pressure element, in particular one end of a conveyor belt (18) is arranged by means of which the web section (17) to be wound up is adapted to be pressed against the outer face of the winding core (1), and/or a reel already available there, wherein the pressure element, depending on the position of rotation of the winding core (1), is tracked with respect thereto such that a gap width between the pressure element and the outer face of the winding core (1), and/or a reel possibly already available there, remains substantially constant.

12. The device according to any of claims 7 to 11, **characterized in that** it further comprises a processing station, in particular a grinding station (28) with a grinding element (29), in which the outer circumference of the set pipe shell (24) is adapted to be finished in a material-removing manner while the pipe shell (24) is still supported by the winding core, wherein the winding core (1) is driven at inconstant angular speed, and wherein the angular speed of the winding core (1) varies as a function of the distance of the processing element acting on the outer circumference of the pipe shell (24) from the axis of rotation of the winding core (1).

13. A pipe shell (24') with a polygonal cross-section which is manufactured by a method according to any of claims 1 to 6.

14. The pipe shell according to claim 13, **characterized in that** it comprises a substantially square cross-section, wherein it preferably comprises rounded corner regions (24b) in cross-section.

15. The pipe shell according to claims 13 or 14, **characterized in that** it comprises in cross-section bar-shaped elevations (24c) at the inner face of plane shell regions (24a).

## Patentansprüche

1. Verfahren zum Herstellen von Rohrschalen (24') aus gebundener Mineralwolle, wobei ein Bahnabschnitt (17) einer Mineralwollebahn, die mit einem wärmehärtenden, doch immer noch unausgehärteten Bindemittel, das die geforderte Wanddicke der Rohrschale (24') ergibt, versehen ist, um einen drehend angetriebenen, rohrförmigen Wickelkern (1) gewickelt wird, und wobei die dadurch ausgebildete, doch immer noch unausgehärtete Rohrschale (24) durch Wärme an dem äußeren Umfang des Wickelkerns (1) ausgehärtet wird und der Wickelkern (1) aus der ausgehärteten Rohrschale (24') herausgezogen wird,
**dadurch gekennzeichnet, dass**
der Wickelkern (1) einen polygonalen Querschnitt aufweist, wobei die Rohrschale (24) während des Wickelvorgangs ebenfalls einen polygonalen Querschnitt erlangt, und
der Wickelkern (1) mit einer nicht konstanten Winkelgeschwindigkeit angetrieben wird, wobei die Winkelgeschwindigkeit des Wickelkerns (1) als eine Funktion des wirksamen Abstands des jeweiligen Bereichs des Bahnabschnitts (17), der von der Drehachse des Wickelkerns (1) auf die äußere Umfangsfläche trifft, so dass die Zugkräfte, die auf den Bahnabschnitt (17), der während des Wickelvorgangs aufzuwickeln ist, wirken, in einem geringeren Ausmaß variieren und besonders im Wesentlichen konstant sind.

2. Verfahren nach Anspruch 1, **dadurch gekennzeichnet, dass** die Winkelgeschwindigkeit des Wickelkerns (1) derart gesteuert wird, dass die auf den Bahnabschnitt (17) beim Wickelvorgang einwirkenden Zugkräfte um maximal 10 %, und insbesondere um maximal 5 %, vom Sollwert abweichen.

3. Verfahren nach Anspruch 1 oder 2, **dadurch gekennzeichnet, dass** die Rohrschale (24) beim Wickeln einen quadratischen Querschnitt erhält, wobei ein Wickelkern (1) mit einem im Wesentlichen quadratischen Querschnitt eingesetzt wird, und wobei die Rohrschale (24) beim Wickeln vorzugsweise abgerundete Eckbereiche (24b) im Querschnitt erhält, wobei hierzu ein Wickelkern (1) mit im Querschnitt abgerundeten Eckbereichen (3b) eingesetzt wird.

4. Verfahren nach einem der Ansprüche 1 bis 3, **dadurch gekennzeichnet, dass** die Rohrschale (24) im Querschnitt mit leistenförmigen Erhebungen (24c) an der Innenfläche von ebenen Schalenbereichen (24a) ausgebildet wird, wobei ein Wickelkern (1) mit im Querschnitt nutenförmigen Vertiefungen (3c) an der Außenseite von ebenen Flächenbereichen (3a) eingesetzt wird.

5. Verfahren nach einem der Ansprüche 1 bis 4, **dadurch gekennzeichnet, dass** der aufzuwickelnde Bahnabschnitt (17) mittels einem Andruckelement, insbesondere einem Ende eines Förderbands (18), gegen die Außenfläche des Wickelkerns (1) bzw. einen dort ggf. bereits vorliegenden Wickel gedrückt wird, wobei das Andruckelement hierzu je nach Drehlage des Wickelkerns (1) gegenüber diesem derart nachgeführt wird, dass eine Spaltbreite zwischen dem Andruckelement und der Außenfläche des Wickelkerns (1) bzw. eines dort ggf. bereits vorliegenden Wickels im Wesentlichen konstant bleibt.

6. Verfahren nach einem der Ansprüche 1 bis 5, **dadurch gekennzeichnet, dass** im Anschluss an die Aushärtung der Außenumfang der ausgehärteten, noch am Wickelkern (1) abgestützten Rohrschale (24) in einer Bearbeitungsstation, insbesondere einer Schleifstation (28) mit einem Schleifelement (29), materialgebend fertig bearbeitet wird, wobei der Wickelkern (1) mit einer nicht konstanten Winkelgeschwindigkeit angetrieben wird, und wobei die Winkelgeschwindigkeit des Wickelkerns (1) in Abhängigkeit vom Abstand des auf den Außenumfang der Rohrschale (24) einwirkenden Bearbeitungselements von der Drehachse des Wickelkerns (1) variiert.

7. Vorrichtung zur Herstellung von Rohrschalen (24') aus gebundener Mineralwolle, mit
einer Wickelstation (19), an der ein die gewünschte Wanddicke der Rohrschale (24') ergebender Bahnabschnitt (17) einer mit thermisch aushärtbarem, jedoch noch unausgehärtetem Bindemittel versehenen Mineralwollebahn um einen drehend angetriebenen rohrförmigen Wickelkern (1) aufwickelbar ist,
einer Aushärtestation (25), zum Aushärten der so gebildeten Rohrschale (24) am Außenumfang des Wickelkernes (1) durch Wärmeeinwirkung, und
einer Abziehstation (32), in welcher der Wickelkern (1) aus der Rohrschale (24) herausziehbar ist,
**dadurch gekennzeichnet,**
**dass** der Wickelkern (1) einen polygonalen Querschnitt aufweist, und
**dass** die Vorrichtung ferner eine Steuerungseinheit aufweist, mittels welcher der Wickelkern (1) mit einer nicht konstanten Winkelgeschwindigkeit angetrieben wird, wobei die Winkelgeschwindigkeit des Wickelkerns (1) in Abhängigkeit vom wirksamen Abstand des jeweils auf die äußere Umfangsfläche auftreffenden Bereichs des Bahnabschnitts (17) von der Drehachse des Wickelkerns (1) variiert, so dass die auf den aufzuwickelnden Bahnabschnitt (17) beim Wickelvorgang einwirkenden Zugkräfte in geringerem Maße schwanken, insbesondere im Wesentlichen konstant sind.

8. Vorrichtung nach Anspruch 7, **dadurch gekennzeichnet, dass** die Steuerungs-einheit die Winkelgeschwindigkeit des Wickelkerns (1) derart steuert, dass die auf den Bahnabschnitt (17) beim Wickelvorgang einwirkenden Zugkräfte um maximal 10 %, und insbesondere um maximal 5 %, vom Sollwert abweichen.

9. Vorrichtung nach Anspruch 7 oder 8, **dadurch gekennzeichnet, dass** der Wickelkern (1) einen im Wesentlichen quadratischen Querschnitt aufweist, wobei der Wickelkern (1) vorzugsweise im Querschnitt abgerundete Eckbereiche (3b) aufweist.

10. Vorrichtung nach einem der Ansprüche 7 bis 9, **dadurch gekennzeichnet, dass** der Wickelkern (1) im Querschnitt in ebenen Flächenbereichen (3a) außenseitig nutenförmige Vertiefungen (3c) aufweist.

11. Vorrichtung nach einem der Ansprüche 7 bis 10, **dadurch gekennzeichnet, dass** ferner ein Andruckelement, insbesondere einem Ende eines Förderbands (18), angeordnet ist, mittels dem der aufzuwickelnde Bahnabschnitt (17) gegen die Außenfläche des Wickelkerns (1) bzw. einen dort ggf. bereits vorliegenden Wickel drückbar ist, wobei das Andruckelement hierzu je nach Drehlage des Wickelkerns (1) gegenüber diesem derart nachgeführt wird, dass eine Spaltbreite zwischen dem Andruckelement und der Außenfläche des Wickelkerns (1) bzw. eines dort ggf. bereits vorliegenden Wickels im Wesentlichen konstant bleibt.

12. Vorrichtung nach einem der Ansprüche 7 bis 11, **dadurch gekennzeichnet, dass** sie ferner eine Bearbeitungsstation, insbesondere eine Schleifstation (28) mit einem Schleifelement (29), aufweist, in welcher der Außenumfang der ausgehärteten Rohrschale (24) materialgebend fertig bearbeitbar ist, während die Rohrschale (24) noch vom Wickelkern abgestützt ist, wobei der Wickelkern (1) mit einer nicht konstanten Winkelgeschwindigkeit angetrieben wird, und wobei die Winkelgeschwindigkeit des Wickelkerns (1) in Abhängigkeit vom Abstand des auf den Außenumfang der Rohrschale (24) einwirkenden Bearbeitungselements von der Drehachse des Wickelkerns (1) variiert.

13. Rohrschale (24') mit einem polygonalen Querschnitt, welche durch ein Verfahren nach einem der Ansprüche 1 bis 6 hergestellt ist.

14. Rohrschale nach Anspruch 13, **dadurch gekennzeichnet, dass** sie einen im Wesentlichen quadratischen Querschnitt aufweist, wobei sie vorzugsweise im Querschnitt abgerundete Eckbereiche (24b) aufweist.

15. Rohrschale nach Anspruch 13 oder 14, **dadurch gekennzeichnet, dass** sie im Querschnitt in ebenen Schalenbereichen (24a) an der Innenfläche leistenförmige Erhebungen (24c) aufweist.

## Revendications

1. Procédé de fabrication de billettes creuses (24') de laine minérale liée, dans lequel une section de bande (17) d'une bande de laine minérale dotée d'un agent de liaison thermodurcissable, mais toujours non durci qui donne l'épaisseur de paroi souhaitée de la billette creuse (24') est enroulée autour d'un noyau d'enroulement en forme de tuyau entraîné en rotation (1), et dans lequel la billette creuse (24) ainsi formée et toujours non durcie est durcie au niveau de la circonférence extérieure du noyau d'enroulement (1) sous l'effet de la chaleur et le noyau d'enroulement (1) est retiré de la billette creuse durcie (24'),
**caractérisé en ce**
**que** le noyau d'enroulement (1) présente une section transversale polygonale, dans lequel la billette creuse (24) obtient aussi une section transversale polygonale pendant le processus d'enroulement, et
**que** le noyau d'enroulement (1) est entraîné à une vitesse angulaire inconstante, dans lequel la vitesse angulaire du noyau d'enroulement (1) varie en fonction de la distance effective de la région respective de la section de bande (17) qui rencontre la face circonférentielle extérieure de l'axe de rotation du noyau d'enroulement (1) de sorte que les forces de traction agissant sur la section de bande (17) à enrouler pendant le processus d'enroulement varient à un degré moindre et soient en particulier sensiblement constantes.

2. Procédé selon la revendication 1, **caractérisé en ce que** la vitesse angulaire du noyau d'enroulement (1) est commandée de sorte que les forces de traction agissant sur la section de bande (17) pendant le processus d'enroulement dévient de la valeur cible d'un maximum de 10 %, et en particulier d'un maximum de 5 %.

3. Procédé selon la revendication 1 ou 2, **caractérisé en ce que** la billette creuse (24) obtient une section transversale carrée pendant le processus d'enroulement, dans lequel un noyau d'enroulement (1) avec une section transversale sensiblement carrée est utilisé, et dans lequel la billette creuse (24) obtient des régions de coin de préférence arrondies (24b) en section transversale pendant le processus d'enroulement, dans lequel un noyau d'enroulement (1) avec des régions de coin arrondies (3b) en section transversale est utilisé à cette fin.

4. Procédé selon l'une quelconque des revendications 1 à 3, **caractérisé en ce que** la billette creuse (24) est formée en section transversale avec des élévations en forme de barre (24c) sur la face intérieure de régions de coque planes (24a), dans lequel un noyau d'enroulement (1) est utilisé avec des dépressions en forme de rainure (3c) en section transversale au niveau du côté extérieur de régions de face plane (3a).

5. Procédé selon l'une quelconque des revendications 1 à 4, **caractérisé en ce que** la section de bande (17) à enrouler est pressée contre la face extérieure du noyau d'enroulement (1), et/ou contre une bobine qui y est déjà peut-être disponible, au moyen d'un élément de pression, en particulier une extrémité d'une bande transporteuse (18), dans lequel l'élément de pression, selon la position de rotation du noyau d'enroulement (1), est suivi par rapport à celui-ci de sorte qu'une largeur de fente entre l'élément de pression et la face extérieure du noyau d'enroulement (1), et/ou une bobine qui y est déjà peut-être disponible, reste sensiblement constante.

6. Procédé selon l'une quelconque des revendications 1 à 5, **caractérisé en ce que**, suivant le durcissement, la circonférence extérieure de la billette creuse durcie (24) qui est toujours supportée sur le noyau d'enroulement (1) est finie dans un poste de traitement, en particulier un poste de broyage (28), avec un élément de broyage (29) d'une manière retirant le matériau, dans lequel le noyau d'enroulement (1) est entraîné à une vitesse angulaire inconstante, et dans lequel la vitesse angulaire du noyau d'enroulement (1) varie en fonction de la distance de l'élément de traitement agissant sur la circonférence extérieure de la billette creuse (24) de l'axe de rotation du noyau d'enroulement (1).

7. Dispositif pour la fabrication de billettes creuses (24') de laine minérale liée, comprenant un poste d'enroulement (19) au niveau duquel une section de bande (17) d'une bande de laine minérale dotée d'un agent liant thermodurcissable mais toujours non durci qui donne l'épaisseur de paroi souhaitée de la billette creuse (24') est adaptée pour être enroulée autour d'un noyau d'enroulement en forme de tuyau entraîné en rotation (1),
un poste de durcissement (25) pour le durcissement de la billette creuse (24) ainsi formée au niveau de la circonférence extérieure du noyau d'enroulement (1) sous l'effet de la chaleur, et
un poste de retrait (32) dans lequel le noyau d'enroulement (1) est adapté pour être retiré de la billette creuse (24),
**caractérisé en ce**
**que** le noyau d'enroulement (1) présente une section transversale polygonale, et
**que** le dispositif comprend en outre une unité de commande au moyen de laquelle le noyau d'enroulement (1) est entraîné à une vitesse angulaire inconstante, dans lequel la vitesse angulaire du noyau d'enroulement (1) varie en fonction de la distance effective de la région respective de la section de bande (17) qui rencontre la face circonférentielle extérieure de l'axe de rotation du noyau d'enroulement (1) de sorte que les forces de traction agissant sur la section de bande (17) à enrouler pendant le processus d'enroulement varient à un degré moindre et soient en particulier sensiblement constantes.

8. Dispositif selon la revendication 7, **caractérisé en ce que** l'unité de commande commande la vitesse angulaire du noyau d'enroulement (1) de sorte que les forces de traction agissant sur la section de bande (17) pendant le processus d'enroulement dévient de la valeur cible d'un maximum de 10 %, et en particulier d'un maximum de 5 %.

9. Dispositif selon la revendication 7 ou 8, **caractérisé en ce que** le noyau d'enroulement (1) présente une section transversale sensiblement carrée, dans lequel le noyau d'enroulement (1) comprend de préférence des régions de coin arrondies (3b) en section transversale.

10. Dispositif selon l'une quelconque des revendications 7 à 9, **caractérisé en ce que** le noyau d'enroulement (1) comprend des dépressions en forme de rainure en section transversale (3c) sur le côté extérieur de régions de face plane (3a).

11. Dispositif selon l'une quelconque des revendications 7 à 10, **caractérisé en ce qu'**en outre, un élément de pression, en particulier une extrémité d'une bande transporteuse (18) est agencé, au moyen de laquelle la section de bande (17) à enrouler est adaptée pour être pressée contre la face extérieure du noyau d'enroulement (1), et/ou une bobine qui y est déjà disponible, dans lequel l'élément de pression, selon la position de rotation du noyau d'enroulement (1), est suivi par rapport à celui-ci de sorte qu'une largeur de fente entre l'élément de pression et la face extérieure du noyau d'enroulement (1), et/ou une bobine qui y est déjà peut-être disponible, reste sensiblement constante.

12. Dispositif selon l'une quelconque des revendications 7 à 11, **caractérisé en ce qu'**il comprend en outre un poste de traitement, en particulier un poste de broyage (28) avec un élément de broyage (29), dans lequel la circonférence extérieure de la billette creuse durcie (24) est adaptée pour être finie d'une manière à retirer du matériau alors que la billette creuse (24) est toujours supportée par le noyau d'enroulement, dans lequel le noyau d'enroulement (1) est entraîné à une vitesse angulaire inconstante, et dans lequel la vitesse angulaire du noyau d'enroulement (1) varie en fonction de la distance de l'élément de traitement agissant sur la circonférence extérieure de la billette creuse (24) de l'axe de rotation du noyau d'enroulement (1).

13. Billette creuse (24') avec une section transversale polygonale qui est fabriquée par un procédé selon l'une quelconque des revendications 1 à 6.

14. Billette creuse selon la revendication 13, **caractérisée en ce qu'**elle comprend une section transversale sensiblement carrée, dans laquelle elle comprend de préférence des régions de coin arrondies (24b) en section transversale.

15. Billette creuse selon la revendication 13 ou 14, **caractérisée en ce qu'**elle comprend des élévations en forme de barre en section transversale (24c) au niveau de la face intérieure de régions de coque plane (24a).
